# EUROPEAN PATENT APPLICATION

(11) **EP 4 661 373 A1**
(43) Date of publication of application: **10.12.2025**
(21) Application number: 25180764.0
(22) Date of filing: 04.06.2025
(51) Int. Cl.: H04L 61/5061

(54) **MANAGING IP UTILIZATION IN SMFS AND UPFS**

(30) Priority: 07.06.2024 US 202418737265
(71) Applicant: T-Mobile USA, Inc., Bellevue, WA 98006-1350 (US)
(72) Inventor: ARUNACHALAM, Kameswaran, Bellevue, 98006 (US); VELUSAMY, Saravana, Bellevue, 98006 (US)
(74) Representative: Finch, Steven Caffall

(57) **Abstract**

Described herein are a session management function (SMF) and user plane function (UPF) configured allocate and utilize Internet Protocol (IP) pools to support sessions for user equipment (UE). The SMF allocates an IP pool that is then used for sessions by a UPF. The UPF determines when the count of sessions falls to a floor threshold and notifies the SMF of this. In response, the SMF sends an instruction to the UPF to release remaining sessions of the IP pool. The UPF receives the instruction and releases the sessions, and the SMF reclaims the IP pool.

## Description

### BACKGROUND

In Fifth Generation (5G) core networks, the session management function (SMF) is responsible for allocating Internet Protocol (IP) address pools (also referred to herein simply as "IP pools") among user plane functions (UPFs) supporting sessions that use the IP addresses. The SMF divides the total IP pool into IP pool subnets (also simply called "IP pools") which may have a same size or differing sizes for, e.g., differing functions. Once these IP pools have been allocated to the UPFs, the SMF receives session reports from the UPFs that describe IP pool utilization. Based on those reports, the SMF may allocate an additional IP pool to a UPF (e.g., when a threshold is reached). Also, if the session report indicates that zero sessions are using an IP pool at a UPF, the SMF may reclaim it.

Often, inactive sessions may linger on after serving their purposes. IP pools with these inactive sessions may be supporting relatively few sessions, but because they are supporting sessions, they cannot be reclaimed by the SMF. UPFs may then consume too many IP pools which they under-utilize, and the SMF may over-utilize IP pools, allocating additional IP pools while current IP pools still have capacity.

### BRIEF DESCRIPTION OF THE DRAWINGS

The detailed description is set forth with reference to the accompanying figures. In the figures, the left-most digit(s) of a reference number identifies the figure in which the reference number first appears. The same reference numbers in different figures indicate similar or identical items.
FIGs. 1A-1B are overview diagrams of different manners of managing utilization of IP pools at UPFs by those UPFs and an SMF.
FIG. 2 is a diagram of a telecommunications network including network functions and a portion of physical equipment of that telecommunication network, the network functions and equipment showing the SMF, UPFs, and their interconnections with other parts of the telecommunications network.
FIG. 3 is a flow diagram of an illustrative process for determining that a count of sessions for an IP pool at a UPF has fallen to a floor threshold, sending a notification of that result to an SMF, receiving an instruction from the SMF to release remaining sessions of the IP pool, and releasing the remaining sessions.
FIG. 4 is a flow diagram of an illustrative process for allocating an IP pool to a UPF, receiving a session report from the UPF indicating that a count of sessions for the IP pool have fallen to a floor threshold, sending an instruction to the UPF to clear remaining sessions for the IP pool, and reclaiming the IP pool.
FIG. 5 is a schematic diagram of a computing device capable of implementing functionality of at least one of the UPFs or SMF described herein.

### DETAILED DESCRIPTION

This disclosure is directed in part to a session management function (SMF) and user plane function (UPF) configured allocate and utilize Internet Protocol (IP) pools to support sessions for user equipment (UE). The SMF allocates an IP pool that is then used to support sessions by a UPF. The UPF determines when the count of sessions falls to a floor threshold and notifies the SMF of this. Such a notification may, for instance, be provided in a session report to the SMF. In response, the SMF sends an instruction, such as an admin clear to the UPF to release remaining sessions of the IP pool. The UPF receives the instruction and releases the sessions, and the SMF reclaims the IP pool.

In some implementations, the floor threshold may be applied conditionally by the UPF and SMF based on whether a trigger threshold for the count of sessions of the IP pool was previously reached. For example, a trigger threshold could be a count of 50,000 sessions, and until that number of sessions has been supported by an IP pool, the floor threshold may not be applied to that IP pool. Because session reports may be provided at intervals from the UPF to the SMF, both UPF and SMF may be aware that the trigger threshold has been met, and thus both may know whether to apply the floor threshold.

In further implementations, the SMF may send a delete cause code to an access and mobility management function (AMF) on behalf of UE associated with one of the remaining sessions that were released to cause the UE to reattach to a telecommunications network that includes the SMF, UPF, and AMF. UEs that had active sessions may reattach, and UEs that did not have active sessions may not, leading to clearing of inactive sessions from IP pool use without harming that ability of active sessions to continue.

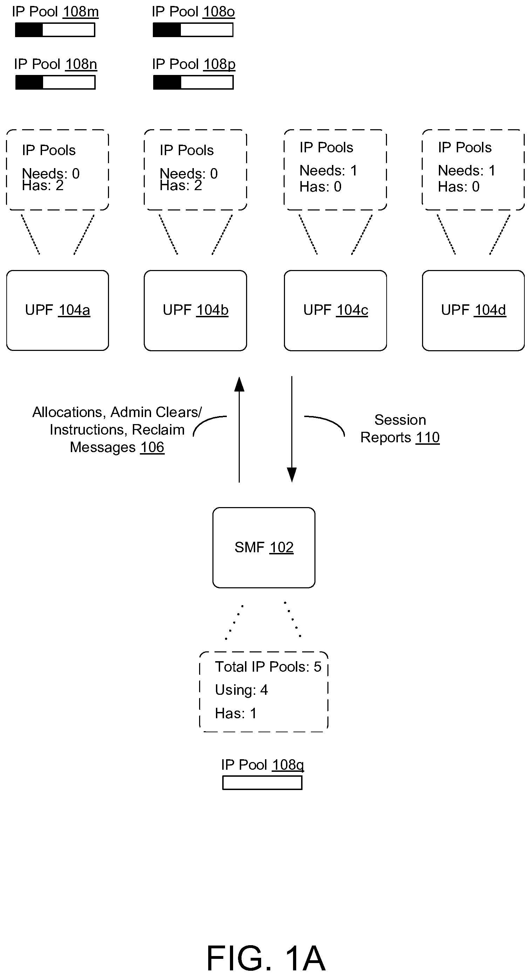

FIGs. 1A-1B are overview diagrams of different manners of managing utilization of IP pools at UPFs by those UPFs and an SMF. FIG. 1A illustrates an SMF 102 and a plurality of UPFs 104, including UPF 104a, UPF 104b, UPF 104c, and UPF 104d. The SMF 102, at 106, communicates messages allocating and reclaiming IP pools 108 and instructions to release sessions. The UPFs 104 send, at 110, session reports to the SMF 102. UPF 104a has IP pools 108m and 108n allocated to it, and UPF 104b has IP pools 108o and 108p allocated to it. The SMF 102 has one remaining IP pool 108q to allocate among the UPFs 104.

FIG. 1A illustrates states of the IP pools 108 at a moment in time. Prior to that moment, the SMF 102 may have allocated IP pools 108m and 108n to UPF 104a and IP pools 108o and 108q to UPF 104b. Initially, IP pool 108m and IP pool 108o may have been allocated to UPFs 104a and 104b, respectively. Each of UPFs 104a and 104b may have supported an increasing number of sessions with its respective IP pool 108m/108o. Upon reaching a ceiling threshold, either complete use of the IP pool 108m/108o or some number or percentage less than that, the SMF 102 may allocate another IP pool 108, such as IP pool 108n to UPF 104a or IP pool 108q to UPF 104b. The UPFs 104a and 104b, having received multiple IP pools 108 each, may use each of the allocated IP pools 108 to support sessions. Thus, each of IP pools 108m 108n, 108o, and 108p may support some number of sessions.

In various implementations, the SMF 102 may be configured to reclaim an IP pool 108 when that IP pool 108 supports zero sessions. The SMF 102 may track how many sessions are supported by receiving session reports from the UPFs 104 that indicate counts of sessions for each of their allocated IP pools 108. Unless a count indicates zero sessions, no IP pool 108 is reclaimed.

As shown in FIG. 1A, the number of sessions for each IP pool108m 108n, 108o, and 108p may fall over time, in some cases reflecting mostly inactive sessions. These UPFs 104a and 104b over under-utilizing the IP pools 108 allocated to them. At the same time, SMF 102 may have over-allocated its IP pools 108, having only a single IP pool 108q left to allocate among UPF 104c and UPF 104d. Thus, SMF 102 and UPFs 104 find themselves short of IP pools 108 despite supporting relatively few sessions.

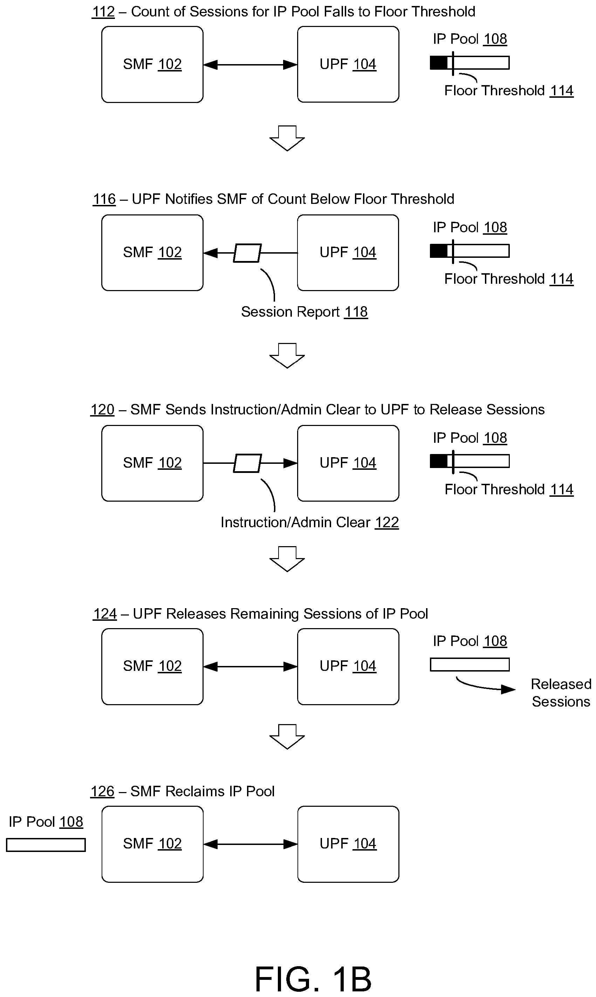

FIG. 1B illustrates an SMF 102 and UPF 104 configured with a floor threshold to apply to sessions in IP pools 108. At 112, an IP pool 108 of the UPF 104 may have a count of sessions that falls to a floor threshold 114. At 116, the UPF 104 sends a session report 118 to the SMF 102, notifying the SMF 102 of the count below the floor threshold 114. At 120, the SMF 102 send an instruction 122 to the UPF 104 to release remaining sessions of the IP pool 108. At 124, the UPF 104 releases the sessions and, at 126, the SMF 102 reclaims the IP pool 108.

In various implementations, prior to 112, the SMF 102 may have allocated the IP pool 108 to the UPF 104. The total IP pool or pools available to the SMF 102 to assign may be represented, for example as a '/44', and each allocated IP pool, such as IP pool 108, may be an IP pool subnet of the '/44.' Each IP pool subnet may be represented, for instance, as a '/50', and there may be thirty-two '/50' subnets for each '/44.' For example, if the SMF 102 has two '/44' IP pools to assign, there could be sixty-four '/50' IP pool subnets. The IP pool 108, then, is such a '/50' IP pool subnet, and the SMF 102 may transmit a message to the UPF 104 allocating the IP pool 108 to the UPF 104. As UEs then send connection requests, they may be associated with a UPF, such as UPF 104, to support sessions for the UEs using the IP pool 108.

In some implementations, the number of sessions supported by IP pool 108 may meet a ceiling threshold. As used herein, "meet" covers meeting or exceeding, as exceeding a threshold inherently includes meeting it. This may have occurred, for instance, prior to 112. The ceiling threshold could represent all available IP addresses of IP pool 108 being used by sessions or could represent some number short of that. This may be indicated to the SMF 102 simply by reporting the count of sessions for the IP pool 108 and letting the SMF 102 realize that the ceiling threshold has been met, or could be indicated with a parameter (e.g., a flag, etc.) in the session report indicating that the ceiling threshold has been crossed. Upon noting that the ceiling threshold has been crossed, the SMF 102 may assign another IP pool to the UPF 104 (not shown in FIG. 1B).

At 112, the number of sessions for the IP pool 108 has fallen to a floor threshold 114. As used herein, "fallen to" includes falling to the floor threshold 114 and falling below the floor threshold 114. The floor threshold 114 is a number greater than zero at which an SMF 102 may issue an admin clear instruction 122 to cause the UPF 104 to release remaining sessions. The floor threshold 114 may be part of the configuration of the UPF 104, SMF 102, or both.

At 116, the UPF 104 sends a session report 118 indicating that the count of sessions for the IP pool 108 has fallen to the floor threshold 114. This may be done simply by indicating the count and allowing the SMF 102 to realize that the count is below the floor threshold 114, or may involve setting of a parameter (e.g., a flag, etc.) in the session report 118.

At 120, the SMF 102 receives the session report 118, determines that the count has fallen to the floor threshold 114, and sends an admin clear instruction 122 to the UPF 104 in response. In addition to sending the instruction 122, the SMF 102 may send a delete cause code to an AMF on behalf of a UE associated with one of the remaining sessions that were released to cause the UE to reattach to a telecommunications network that includes the SMF 102, UPF 104, and AMF.

In some implementations, the SMF 102 and UPF 104 may not apply the floor threshold 114 until a trigger threshold for the count of sessions of the IP pool has been reached. For example, a trigger threshold could be a count of 50,000 sessions, and until that number of sessions has been supported by an IP pool 108, the floor threshold 114 may not be applied to that IP pool 108. Because session reports 118 may be provided at intervals from the UPF 104 to the SMF 102, both UPF 104 and SMF 102 may be aware that the trigger threshold has been met, and thus both may know whether to apply the floor threshold 114.

At 124, the UPF 104 receives the instruction 122 and, in response, releases any remaining sessions for the IP pool 108.

At 126, the SMF 102 reclaims the IP pool 108 and, if there is a need to allocate it, is able to assess current needs of all UPFs 104 in reallocating IP pool 108. This prevents the UPF 104 from under-utilizing IP pools, e.g., holding on to the IP pool 108 when it has few sessions, some of which may even be inactive. And it provides easier reclamation of IP pools for the SMF 102, reducing the likelihood of over-utilization by assigning many IP pools to be little used by their recipient UPFs.

In some implementations, UEs that were actively using their sessions and were released may receive the cause code from the SMF 102 through the AMF and request reattachment. Those UEs may be assigned to the same UPF 104 or a different UPF 104 and establish a new session.

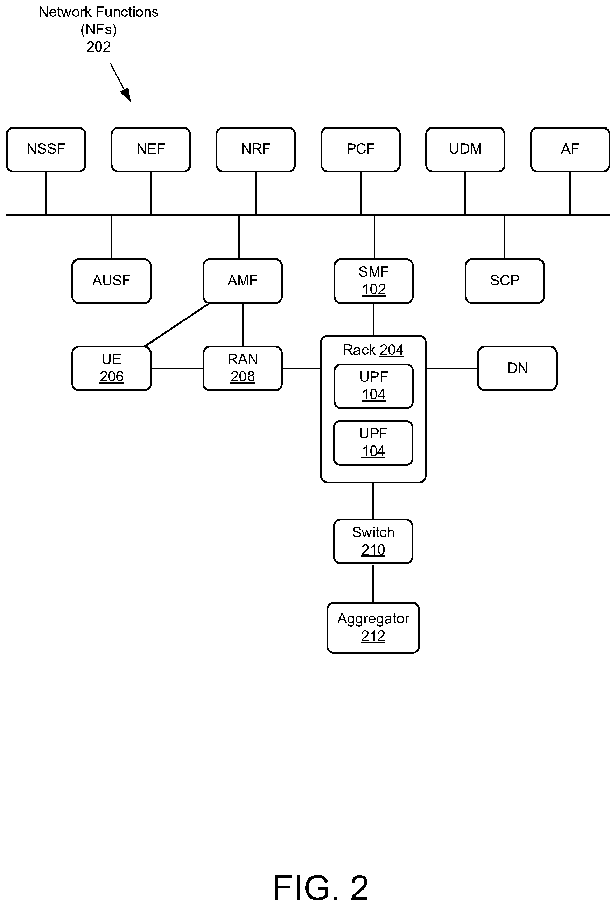

FIG. 2 is a diagram of a telecommunications network including network functions and a portion of physical equipment of that telecommunication network, the network functions and equipment showing the SMF, UPFs, and their interconnections with other parts of the telecommunications network. As illustrated, the SMF 102 and UPFs 104 are connected to a plurality of network functions (NFs 202), as are a UE 204 through a radio access network (RAN) 206. The UPFs 104 may be stored in one or more racks 208 and connected to a switch 210 and aggregator 212.

Standards for 5G communications define many types of NFs 202 that can be present in 5G telecommunication networks (e.g., the 5G core network), including but not limited to an Authentication Server Function (AUSF), Access and Mobility Management Function (AMF), Data Network (DN), Unstructured Data Storage Function (UDSF), Network Exposure Function (NEF), Network Repository Function (NRF), Network Slice Selection Function (NSSF), Policy Control Function (PCF), Unified Data Management (UDM), Unified Data Repository (UDR), Application Function (AF), 5G-Equipment Identity Register (5G-EIR), Network Data Analytics Function (NWDAF), Charging Function (CHF), Service Communication Proxy (SCP), Security Edge Protection Proxy (SEPP), Non-3GPP InterWorking Function (N3IWF), Trusted Non-3GPP Gateway Function (TNGF), and Wireline Access Gateway Function (W-AGF). NFs 202 can also include the SMF 102 and UPFs 104, which are shown and described separately from other NFs 202 in this application, but which may equally be considered part of the 5G core network and which may equally, in 5G standards, be considered network functions.

The NFs 202 can execute as hardware elements, software elements, and/or combinations of the two within telecommunication network(s), and accordingly many types of the NFs 202 can be implemented as software and/or as virtualized functions that execute on cloud servers or other computing devices.

In various implementations, the UE 204 connects to a RAN 206 to receive access to a telecommunication network that includes the functions and devices shown in FIG. 2. On behalf of the UE 204, the RAN 206 sends the UEs request to an AMF along with tracking area code (TAC) information identifying the location of a base station implementing the RAN 206. SMF selection then occurs, resulting in the selection of SMF 102. An NRF or domain name server (DNS) can select SMF 102 based at least in part on a radio access technology (RAT) type used by the UE 204 and RAN 206 to communicate. The SMF 102 then selects one of the UPFs 104 to support a session for the UE 204, and the selected UPF 104 allocates an IP address to the UE 204.

The different allocation of IP pools among the UPFs 104 stored in or on rack 208 result in multiple different routes being learned by the switch 210 and aggregator 212. In some implementations, the switch 210 may be a top-of-rack switch supporting layer 2 and layer 3 communications, and the aggregator 212 may be a layer 3 router.

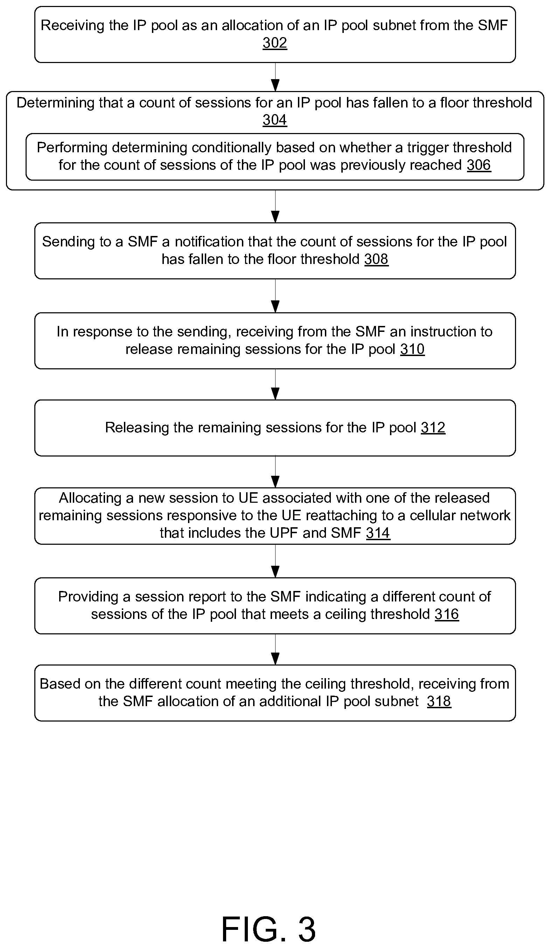

FIGs. 3-4 illustrate example processes. These processes are illustrated as logical flow graphs, each operation of which represents a sequence of operations that can be implemented in hardware, software, or a combination thereof. In the context of software, the operations represent computer-executable instructions stored on one or more computer-readable storage media that, when executed by one or more processors, perform the recited operations. Generally, computer-executable instructions include routines, programs, objects, components, data structures, and the like that perform particular functions or implement particular abstract data types. The order in which the operations are described is not intended to be construed as a limitation, and any number of the described operations can be omitted or combined in any order and/or in parallel to implement the processes.

FIG. 3 is a flow diagram of an illustrative process for determining that a count of sessions for an IP pool at a UPF has fallen to a floor threshold, sending a notification of that result to an SMF, receiving an instruction from the SMF to release remaining sessions of the IP pool, and releasing the remaining sessions. As illustrated at 302, the UPF may receive an IP pool as an allocation of an IP pool subnet from the SMF.

At 304, the UPF determines that a count of sessions for an IP pool has fallen to a floor threshold. At 306, the determining may be performed conditionally based on whether a trigger threshold for the count of sessions of the IP pool was previously reached.

At 308, the UPF sends to an SMF a notification that the count of sessions for the IP pool has fallen to the floor threshold. In some implementations, the notification may be a session report indicating usage of IP pool(s) by the UPF.

At 310, in response to the sending, the UPF receives, from the SMF, an instruction to release remaining sessions for the IP pool. In various implementations, the instruction to release may be an admin clear instruction.

At 312, the UPF releases the remaining sessions for the IP pool. In some implementations, the IP pool may be reclaimed by the SMF from the UPF after the releasing.

At 314, the UPF may allocate a new session to a UE associated with one of the released remaining sessions responsive to the UE reattaching to a cellular network that includes the UPF and SMF.

At 316, the UPF may provide a session report to the SMF indicating a different count of sessions of the IP pool that meets a ceiling threshold.

At 318, based on the different count meeting the ceiling threshold, the UPF may receive, from the SMF, allocation of an additional IP pool subnet.

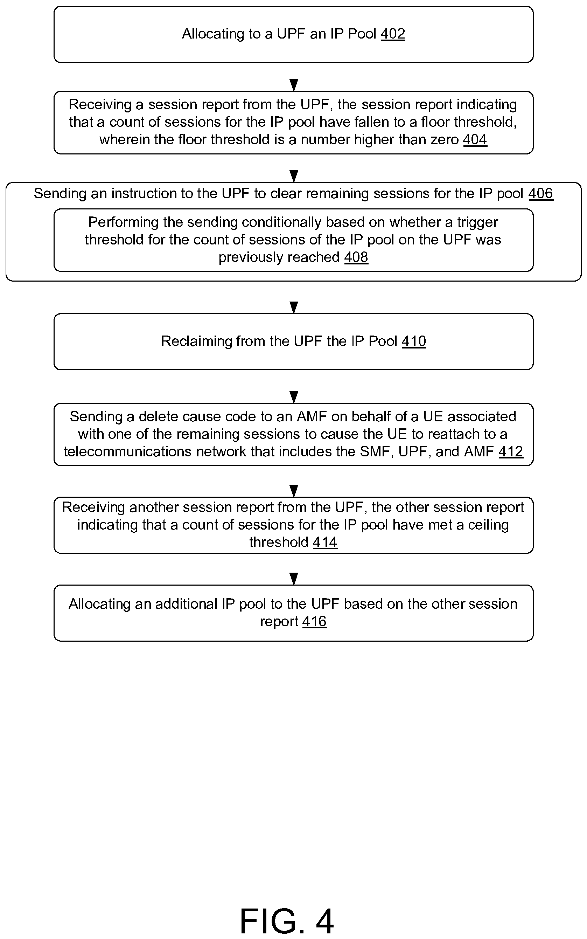

FIG. 4 is a flow diagram of an illustrative process for allocating an IP pool to a UPF, receiving a session report from the UPF indicating that a count of sessions for the IP pool have fallen to a floor threshold, sending an instruction to the UPF to clear remaining sessions for the IP pool, and reclaiming the IP pool. As illustrated at 402, the SMF allocates, to a UPF, an IP pool.

At 404, the SMF receives a session report from the UPF. The session report indicates that a count of sessions for the IP pool have fallen to a floor threshold. The floor threshold is a number higher than zero.

At 406, the SMF sends an instruction to the UPF to clear remaining sessions for the IP pool. At 408, the sending is performed conditionally based on whether a trigger threshold for the count of sessions of the IP pool on the UPF was previously reached. In some implementations, the instruction may be an admin clear instruction.

At 410, the SMF reclaims, from the UPF, the IP pool.

At 412, the SMF may send a delete cause code to an AMF on behalf of a UE associated with one of the remaining sessions to cause the UE to reattach to a telecommunications network that includes the SMF, UPF, and AMF.

At 414, the SMF may receive another session report from the UPF, the other session report indicating that a count of sessions for the IP pool have met a ceiling threshold.

At 416, the SMF may allocate an additional IP pool to the UPF based on the other session report.

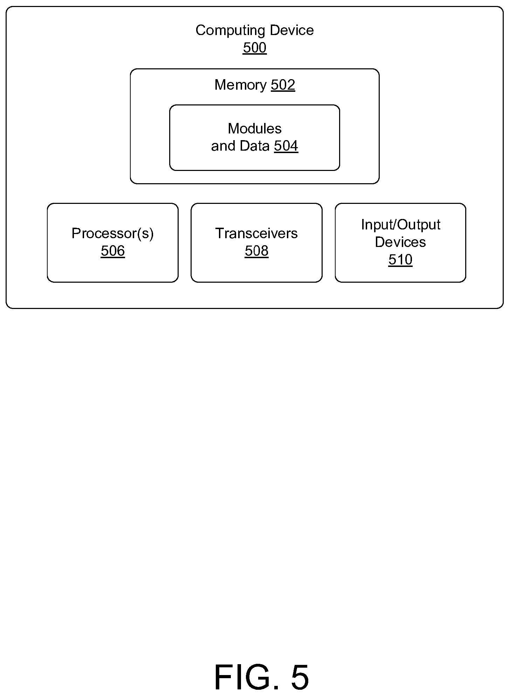

FIG. 5 is a schematic diagram of a computing device capable of implementing functionality of at least one of the UPFs or SMF described herein. As shown, the computing device 500 includes a memory 502 storing modules and data 504, processor(s) 506, transceivers 508, and input/output devices 510.

In various examples, the memory 502 can include system memory, which may be volatile (such as RAM), non-volatile (such as ROM, flash memory, etc.) or some combination of the two. The memory 502 can further include non-transitory computer-readable media, such as volatile and nonvolatile, removable and non-removable media implemented in any method or technology for storage of information, such as computer readable instructions, data structures, program modules, or other data. System memory, removable storage, and non-removable storage are all examples of non-transitory computer-readable media. Examples of non-transitory computer-readable media include, but are not limited to, RAM, ROM, EEPROM, flash memory or other memory technology, CD-ROM, digital versatile discs (DVD) or other optical storage, magnetic cassettes, magnetic tape, magnetic disk storage or other magnetic storage devices, or any other non-transitory medium which can be used to store the desired information.

The memory 502 can include one or more software or firmware elements, such as computer-readable instructions that are executable by the one or more processors 506. For example, the memory 502 can store computer-executable instructions associated with modules and data 504. The modules and data 504 can include a platform, operating system, and applications, and data utilized by the platform, operating system, and applications. Further, the modules and data 504 can implement any of the functionality for the SMF 102, UPFs 104, nodes implementing NFs 202, UE 204, RAN 206, switch 210, aggregator 212, or any other node/device described and illustrated herein.

In various examples, the processor(s) 506 can be a central processing unit (CPU), a graphics processing unit (GPU), or both CPU and GPU, or any other type of processing unit. Each of the one or more processor(s) 506 may have numerous arithmetic logic units (ALUs) that perform arithmetic and logical operations, as well as one or more control units (CUs) that extract instructions and stored content from processor cache memory, and then executes these instructions by calling on the ALUs, as necessary, during program execution. The processor(s) 506 may also be responsible for executing all computer applications stored in the memory 502, which can be associated with types of volatile (RAM) and/or nonvolatile (ROM) memory.

The transceivers 508 can include modems, interfaces, antennas, Ethernet ports, cable interface components, and/or other components that perform or assist in exchanging wireless communications, wired communications, or both.

While the computing device need not include input/output devices 510, in some implementations it may include one, some, or all of these. For example, the input/output devices 510 can include a display, such as a liquid crystal display or any other type of display. For example, the display may be a touch-sensitive display screen and can thus also act as an input device or keypad, such as for providing a soft-key keyboard, navigation buttons, or any other type of input. The input/output devices 510 can include any sort of output devices known in the art, such as a display, speakers, a vibrating mechanism, and/or a tactile feedback mechanism. Output devices can also include ports for one or more peripheral devices, such as headphones, peripheral speakers, and/or a peripheral display. The input/output devices 510 can include any sort of input devices known in the art. For example, input devices can include a microphone, a keyboard/keypad, and/or a touch-sensitive display, such as the touch-sensitive display screen described above. A keyboard/keypad can be a push button numeric dialing pad, a multi-key keyboard, or one or more other types of keys or buttons, and can also include a joystick-like controller, designated navigation buttons, or any other type of input mechanism.

Although features and/or methodological acts are described above, it is to be understood that the appended claims are not necessarily limited to those features or acts. Rather, the features and acts described above are disclosed as example forms of implementing the claims.

## Claims

1. A method comprising:
determining, by a user plane function (UPF) implemented by one or more computing devices, that a count of sessions for an Internet Protocol (IP) pool has fallen to a floor threshold;
sending to a session management function (SMF), by the UPF, a notification that the count of sessions for the IP pool has fallen to the floor threshold;
in response to the sending, receiving from the SMF, by the UPF, an instruction to release remaining sessions for the IP pool; and
releasing, by the UPF, the remaining sessions for the IP pool.

2. The method of claim 1, wherein the notification is a session report indicating usage of IP pool(s) by the UPF.

3. The method of any preceding claim, wherein the instruction to release is an admin clear instruction.

4. The method of any preceding claim, wherein the determining is performed conditionally based on whether a trigger threshold for the count of sessions of the IP pool was previously reached.

5. The method of any preceding claim, further comprising receiving the IP pool as an allocation of an IP pool subnet from the SMF.

6. The method of any preceding claim, further comprising:
providing, by the UPF, a session report to the SMF indicating a different count of sessions of the IP pool that meets a ceiling threshold; and
based on the different count meeting the ceiling threshold, receiving from the SMF, by the UPF, allocation of an additional IP pool subnet.

7. The method of any preceding claim, wherein the IP pool is reclaimed by the SMF from the UPF after the releasing.

8. The method of any preceding claim, further comprising allocating a new session to a user equipment (UE) associated with one of the released remaining sessions responsive to the UE reattaching to a cellular network that includes the UPF and SMF.

9. A system comprising:
one or more processors; and
programming instructions configured to be executed by the one or more processors to implement a session management function (SMF) to perform operations comprising:
allocating, to a user plane function (UPF), an Internet Protocol (IP) pool;
receiving a session report from the UPF, the session report indicating that a count of sessions for the IP pool have fallen to a floor threshold, wherein the floor threshold is a number higher than zero;
sending an instruction to the UPF to clear remaining sessions for the IP pool; and
reclaiming, from the UPF, the IP pool.

10. The system of claim 9, wherein the operations further comprise receiving another session report from the UPF, the other session report indicating that a count of sessions for the IP pool have met a ceiling threshold.

11. The system of claim 10, wherein the operations further comprise allocating an additional IP pool to the UPF based on the other session report.

12. The system of any of claims 9 to 11, wherein the instruction is an admin clear instruction.

13. The system of any of claims 9 to 12, wherein the sending is performed conditionally based on whether a trigger threshold for the count of sessions of the IP pool on the UPF was previously reached.

14. The system of any of claims 9 to 13, wherein the operations further comprise sending a delete cause code to an access and mobility management function (AMF) on behalf of a user equipment (UE) associated with one of the remaining sessions to cause the UE to reattach to a telecommunications network that includes the SMF, UPF, and AMF.

15. A computer-readable storage medium having programming instructions stored thereon that, when executed by one or more processors, implement a user plane function (UPF) to perform the method of any of claims 1 to 8.
